# EUROPÄISCHE PATENTSCHRIFT

(11) **EP 1 738 426 B1**
(45) Veröffentlichungstag und Bekanntmachung des Hinweises auf die Patenterteilung: **07.03.2012**
(21) Anmeldenummer: 05814460.1
(22) Anmeldetag: 16.11.2005
(51) Int. Cl.: H01M 4/68

(54) **GITTER FÜR EINE ELEKTRODE EINES BLEIAKKUMULATORS**
MESH FOR AN ELECTRODE OF A LEAD ACCUMULATOR
GRILLE POUR UNE ELECTRODE D'UN ACCUMULATEUR AU PLOMB

(30) Priorität: 16.11.2004 DE 102004055283
(43) Veröffentlichungstag der Anmeldung: 03.01.2007
(73) Patentinhaber: Akkumulatorenfabrik Moll GmbH & Co. KG, 96231 Bad Staffelstein (DE)
(72) Erfinder: WARLIMONT, Hans, 63579 Freigericht (DE); HOFMANN, Thomas, 01277 Dresden (DE); GELBKE, Manfred, 96231 Bad Staffelstein (DE)
(74) Vertreter: Naumann, Ulrich
(86) Internationale Anmeldenummer: PCT/DE2005/002056
(87) Internationale Veröffentlichungsnummer: WO 2006/053539

(56) Entgegenhaltungen:
- US-A- 4 554 228
- DATABASE WPI Section Ch, Week 200114 Derwent Publications Ltd., London, GB; Class L03, AN 2001-123853 XP002374344 & CN 1 147 700 A (UNIV NANKAI) 16. April 1997 (1997-04-16)
- PATENT ABSTRACTS OF JAPAN Bd. 006, Nr. 264 (E-150), 23. Dezember 1982 (1982-12-23) & JP 57 162256 A (HITACHI KASEI KOGYO KK), 6. Oktober 1982 (1982-10-06)
- PATENT ABSTRACTS OF JAPAN Bd. 010, Nr. 158 (E-409), 6. Juni 1986 (1986-06-06) & JP 61 013565 A (NIHON DENCHI KK), 21. Januar 1986 (1986-01-21)
- PATENT ABSTRACTS OF JAPAN Bd. 012, Nr. 204 (E-620), 11. Juni 1988 (1988-06-11) & JP 63 002253 A (YUASA BATTERY CO LTD), 7. Januar 1988 (1988-01-07)
- PATENT ABSTRACTS OF JAPAN Bd. 015, Nr. 383 (E-1116), 27. September 1991 (1991-09-27) & JP 03 152872 A (JAPAN STORAGE BATTERY CO LTD), 28. Juni 1991 (1991-06-28)

## Beschreibung

Die Erfindung betrifft ein galvanoplastisch hergestelltes Gitter für eine Elektrode eines Bleiakkumulators, welches eine mehrschichtige Verbundstruktur aufweist (Verbundgitter). Diese Verbundstruktur besteht aus einem gitterförmigen Kern aus einem eine höhere Leitfähigkeit als Blei aufweisenden Material, wobei der Kern Kupfer oder eine Kupfer enthaltende Legierung enthält oder aus Kupfer oder aus einer Kupfer enthaltenden Legierung besteht, und aus einer oder mehreren den gitterförmigen Kern umgebenden Schichten, die Blei oder eine Blei enthaltende Legierung enthalten, oder die aus Blei oder aus einer Blei enthaltenden Legierung bestehen. Die Erfindung betrifft ferner ein Gitterband, eine Elektrode für einen Bleiakkumulator, ein Elektrodenband und einen Bleiakkumulator.

Der Bleiakkumulator umfasst mehrere Zellen, wobei jede Zelle mindestens eine Anode aus Bleidioxid Pb0₂, eine Kathode aus Blei Pb und einen Elektrolyten umfasst. Anoden und Kathoden werden zusammenfassend auch als Elektroden bezeichnet. Sie enthalten neben der aktiven Masse (Pb0₂ bzw. Pb) auch jeweils einen Masse- träger, das sog. Gitter. Das Gitter dient der Stromleitung, verleiht der Elektrode die notwendige mechanische Festigkeit und ermöglicht die Verbindung von mehreren Elektroden in der Zelle. Bei dem Elektrolyten handelt es sich vorzugsweise um Schwefelsäure, deren Konzentration beispielsweise 30 Gew.-% beträgt. Derartige Bleiakkumulatoren, die auch als "Batterien" bezeichnet werden, werden insbesondere in Fahrzeugen, insbesondere Kraftfahrzeugen, verwendet. Sie können allerdings auch in anderen Anwendungsbereichen verwendet werden, insbesondere in stationären Anlagen wie beispielsweise Notstromversorgungen oder unterbrechungsfreien Stromversorgungen (USV).

Bei vorbekannten Bleiakkumulatoren können die Elektroden auf verschiedene Weise ausgebildet sein. Die Elektroden können beispielsweise plattenförmig sein. Sie können jedoch auch spiralförmig gewickelt sein. Die in den Elektroden enthaltenen Gitter sind erheblichen korrosiven Belastungen ausgesetzt. Sie beeinflussen weiterhin über die Gleichmäßigkeit der Stromverteilung in der Elektrode sowie über ihren ohmschen Widerstand die Leistungsparameter des Akkumulators entscheidend. Die Gitter werden bisher überwiegend entweder im Kokillenguss aus schmelzflüssigen Bleilegierungen oder in Streckverfahren bzw. Stanzverfahren aus Bleiblechen hergestellt. In diese so hergestellten Gitter wird die aktive Masse in Form einer Paste eingebracht und damit die Elektrode erzeugt. Die einzelnen positiven und negativen Elektroden werden nach weiteren Behandlungsschritten über ein Verschweißen an den als Fahnen bezeichneten Anschlussstellen parallel und in Reihe zu Zellen und Batterien verschaltet.

Wegen der hohen oxidativen elektrochemischen Belastung in saurer, insbesondere schwefelsaurer Umgebung, werden, um ausreichende Haltbarkeiten der Batterien zu erhalten, als Gitter für die Anode (positive Elektrode) gegenwärtig ausschließlich Blei und Bleilegierungen eingesetzt. Diese haben den Vorteil, eine korrosive Deckschicht zu bilden, die in der Zusammensetzung der aktiven Masse ähnelt. Auf diese Weise wird ein guter mechanischer und chemischer Kontakt zwischen der aktiven Masse und dem Gitter über die gesamte Lebensdauer gesichert, wenn die Legierungszusammensetzung und das Gefüge die Deckschichtbildung optimal begünstigen.

Ein Korrosionsvorgang an der Oberfläche des Gitters ist weiterhin für den Herstellprozess von Bedeutung, bei dem sich zwischen der aktiven Masse und der Gitteroberfläche ein elektrisch gut leitfähiger Kontakt ausbildet. Bestandteile der Bleilegierung können für die Aufrechterhaltung dieses Kontaktes und damit für die Zyklenfestigkeit der Batterie begünstigend wirken. Unter diesem Aspekt ist es vorteilhaft, wenn die Außenschicht des Gitters Blei oder eine Bleilegierung enthält oder daraus besteht.

Im Fertigungsprozess ist wegen der auftretenden mechanischen Beanspruchungen eine hohe Festigkeit des Gitters wünschenswert oder erforderlich. Diese Anforderung bestimmt ebenfalls die Gitterkonstruktion und die Legierungszusammensetzung. Da reines Blei weich ist, wird die erforderliche Festigkeit vorzugsweise durch Legierungszusätze erzielt, die eine Aushärtung ermöglichen. Da sich die Festigkeit bei aushärtungsfähigen Legierungen aber zeitabhängig ändert, müssen nach der Herstellung des Gitters Mindestlagerzeiten und zum Teil auch Maximallagerzeiten eingehalten werden. Meistens verursachen die zur Härtung zugefügten Legierungselemente auch einen höheren Korrosionsabtrag als bei Reinblei, welcher zum vorzeitigen Versagen des Gitters führen kann. Weiterhin beeinflussen in Elektrolyten gelöste Legierungsbestandteile die Elektrodenpotenziale und führen zu erhöhtem Wasserverbrauch und verstärkter Selbstentladung der Batterie. Schließlich beeinflusst die Festigkeit des Gitters beim Betrieb der Batterie auch deren Robustheit und Haltbarkeit.

Zusätzlich zum Korrosionsangriff zwingt die vergleichsweise geringe elektrische Leitfähigkeit von Blei zu einem hohen Materialeinsatz, wodurch die erreichbare Leistungsdichte verringert wird. Der Ersatz oder die partielle Substitution des Bleis scheiterte bislang an der mangelnden Oxidationsbeständigkeit und an der mangelnden Haftung der aktiven Masse an nicht bleihaltigen Masseträgern.

Aus der DE 22 41 368 ist es bekannt, für die negative Elektrode (Kathode), deren oxidative Belastung nicht so hoch ist, ein Kupfer-Streckmetallgitter einzusetzen, das galvanisch verbleit und mit einem Bleianguss versehen wird. Diese Lösung ist allerdings mit hohen Fertigungskosten verbunden. Die verwendete geringe Dicke der Bleischicht reicht nur für negative Elektroden aus, nicht aber für positive Elektroden.

Aus der DE 44 04 817 ist ein Verfahren bekannt, mit dem ein Gitter für einen Bleiakkumulator galvanoplastisch hergestellt und durch eine gleichzeitig eingebrachte Teilchendispersion gehärtet wird. Damit ist es möglich, die geometrischen Formen der Stege und Felder des Gitters verhältnismäßig frei zu wählen, wodurch die elektrischen Eigenschaften und die Leistungsdichte verbessert werden können. Die mechanischen Eigenschaften sind zeitunabhängig.

Eine weitere Verbesserung bietet das galvanoplastische Verfahren nach der in der WO 02/057515 A2 beschriebenen kontinuierlichen Verfahrensvariante. Dabei können verschiedene Bleilegierungen mit unterschiedlichen Eigenschaften nacheinander in einem Prozess abgeschieden werden, so dass auf wirtschaftliche Weise ein fertiges Gitter aus einem Schichtverbundwerkstoff hergestellt werden kann.

Mit den angegebenen vorbekannten Verfahren kann allerdings eine signifikant höhere Leitfähigkeit des Gitters nicht erzielt werden.

Aus der US 4,554,228 ist bekannt, eine Kathode für Bleiakkumulatoren herzustellen, indem ein gestrecktes Kupfergitter mit Schichten aus einer Blei-Zinn-Legierung und aus Blei überzogen wird. Die den Kupferkem umgebenden Schichten werden durch eine galvanische Abscheidung hergestellt. Diese Elektrode ist jedoch lediglich als Kathode geeignet.

Hiervon ausgehend liegt der Erfindung die Aufgabe zugrunde, ein Verbundgitter für eine Elektrode eines Bleiakkumulators vorzuschlagen, mit dem die Leistungsdichte des Bleiakkumulators erhöht werden kann, und das auch als Gitter für eine positive Elektrode verwendbar ist.

Erfindungsgemäß wird diese Aufgabe durch die Merkmale des Anspruchs 1 gelöst. Das galvanoplastisch in einem vorzugsweise mehrstufigen Verfahren hergestellte Gitter ist aus einem gitterförmigen Kern aus einem eine höhere elektrische Leitfähigkeit als Blei aufweisenden Material und einer oder mehreren den gitterförmigen Kern umgebenden Schichten, die Blei oder eine Blei enthaltende Legierung enthalten oder die aus Blei oder aus einer Blei enthaltenden Legierung bestehen, aufgebaut. Erfindungsgemäß werden dabei alle Schichten des Verbundgitters durch galvanisch formgebende Abscheidung erzeugt. Der Kern wird galvanoplastisch hergestellt.

Vorteilhaft ist es, den Kern durch eine kontinuierliche galvanische Abscheidung herzustellen. Der Kern kann in einem kontinuierlichen Herstellverfahren in einer ersten Stufe als dünne Schicht mit der gewünschten Gitterstruktur erzeugt werden. Er kann, beispielsweise in einer zweiten Stufe, mit einer oder mehreren Schichten aus Blei oder Bleilegierungen beschichtet werden. Hierzu kann insbesondere eine Variante des in der WO 02/057515 A2 beschriebenen Verfahrens verwendet werden, bei der das Kernmaterial bei der galvanoplastischen Abscheidung erfindungsgemäß nicht aus Blei, sondern aus einem eine höhere elektrische Leitfähigkeit als Blei aufweisenden Material besteht, nämlich einem Metall oder einer Metalllegierung, nämlich Kupfer oder einer Kupferlegierung. Die Kupferabscheidung kann nach einem an sich bekannten Verfahren für die galvanische Erzeugung von Kupferfolien erfolgen, wobei der Abscheidezylinder analog zur Erzeugung eines Batteriegitters strukturiert sein kann, wie in der WO 02/057515 A2 beschrieben. Die den Kern umgebenden Schichten können in nachfolgenden Prozessschritten ebenfalls galvanisch aufgebracht werden. Es ist vorteilhaft, hierzu Nachbeschichtungsstufen des in WO 02/057515 A2 beschriebenen Verfahrens zu nutzen und dabei die Zusammensetzung der Abscheidebäder und Abscheidebedingungen entsprechend der gewünschten Schichtzusammensetzungen und -dicken zu wählen.

Die galvanoplastische Herstellung des Gitterkems hat zahlreiche Vorteile. Sie gestattet auch einen Kern sehr geringer Schichtdicke herzustellen und diese in gewissen Grenzen in ausgewählten besonderen Gitterbereichen zu variieren. Sie ermöglicht weiter die freie Wahl der geometrischen Formen der Stege und Felder im Gitter. Dabei können auch die Zahl und der Querschnitt der hauptsächlich stromtragenden Querstege größer und die Zahl und der Querschnitt der weitgehend nur mechanisch verbindenden Längsstege kleiner gewählt werden. Außerdem lässt sich der Stromfluss und das Verlustverhalten durch kontinuierliche Querschnittsveränderung der Stege optimieren. Durch die Verwendung eines aus härterem Material bestehenden Kerns kann auch jegliche Härtung des Bleis entfallen. Durch die Erfindung kann eine signifikant höhere Leitfähigkeit des Gitters erzielt werden. Die Leistungsdichte der Batterie kann insbesondere dadurch erheblich erhöht werden, dass auch in den Gittern für die positiven Elektroden ein härteres und höher leitfähiges Material als Kern verwendet wird und/oder die Verbundstruktur zur Verringerung aller Gittergewichte bei gleicher oder besserer Leitfähigkeit genutzt wird.

Durch die Erfindung können im Unterschied zu vorbekannten Lösungen die Schichtdicken des Kerns und der äußeren Schichten so gewählt werden, dass die einfache Verarbeitbarkeit und die Korrosionsfestigkeit über die gesamte Batterielebensdauer auch bei der Verwendung als Gitter für die positive Elektrode erreicht werden. Es ist möglich, über die Auswahl des Herstellverfahrens und die Abscheidebedingungen die Schichtdickenverteilung in einzelnen Teilen des Gitters so zu variieren und zu bemessen, dass der Kern auch bei nachfolgenden Verarbeitungsschritten porenfrei von den bleihaltigen Deckschichten umschlossen bleibt und dass diese bleihaltigen Deckschichten eine Dicke aufweisen, die den Kern über die gesamte Betriebsdauer der Batterie hinweg vor korrosivem Angriff durch den Elektrolyten schützt. Durch die schichtweise galvanoplastische Gitterherstellung können Verbundstrukturen erzeugt werden, die eine oder mehrere derart dicke Deckschichten aus Blei und/oder Bleilegierungen und eine derart dünne Kernschicht aus besser leitfähigem Metall aufweisen, dass zwar einerseits Festigkeit und Leitfähigkeit verbessert werden, dass aber andererseits über die gesamte Lebensdauer kein Durchkorrodieren der Deckschicht auftritt, so dass der leitfähige Kern dauerhaft vor dem Elektrolyten geschützt bleibt.

Der Kern enthält Kupfer oder eine Kupfer enthaltende Legierung oder besteht aus Kupfer oder aus einer Kupfer enthaltenden Legierung. Dadurch, dass der elektrische Widerstand von Bleigittertegierungen 20,5 bis 22,5 x 10⁻⁸ Ωm beträgt, der Widerstand von Kupfer dagegen nur 1,55 x 10⁻⁸ Ωm, ist durch eine teilweise Substitution des Bleis durch Kupfer im Querschnitt des Gitters eine erhebliche Erniedrigung seines Widerstandes und damit eine entsprechend deutliche Erhöhung der Leistungsdichte der Batterie möglich.

Wie bereits ausgeführt kann durch die Verwendung eines Kerns aus härterem Material auch jegliche Härtung des Bleis entfallen. Es ist bekannt, dass galvanisch niedergeschlagenes Kupfer je nach Reinheit und Niederschlagsbedingungen Streckgrenzenwerte im Bereich von etwa 300 bis 470 MPa aufweist. Damit ist es möglich, bereits bei Querschnittsanteilen von etwa 5 bis 20% Kupfer Erhöhungen der Streckgrenze des Verbundmaterials auf das Dreifache bis Siebenfache des Bleis zu erreichen.

Außerdem trägt ein Kupferanteil des Verbundes zur Verringerung der effektiven Dichte des Gitters und zur Verbesserung aller darauf bezogenen Eigenschaften bei. Die Dichte des Bleis beträgt 11,34 g/cm³, die Dichte des Kupfers dagegen nur 8,93 g/cm³. Durch das erfindungsgemäße Herstellverfahren kann ein auf eine erhöhte Leitfähigkeit und eine erhöhte Festigkeit optimierter Kern geringer Dichte hergestellt werden. Dies ist hinsichtlich der Materialersparnis, der weiteren Verarbeitbarkeit sowie der Korrosionsbeständigkeit des Gitters von entscheidendem Vorteil.

Weiter erfindungsgemäß wird die den Kern umgebende Schicht oder die den Kern umgebenden Schichten durch eine galvanische Abscheidung, vorzugsweise durch eine kontinuierliche galvanische Abscheidung, hergestellt.

Vorteilhafte Weiterbildungen sind in den Unteransprüchen beschrieben.

Vorteilhaft ist es, wenn mehrere den Kern umgebende Schichten vorhanden sind. In bestimmten Anwendungsfällen kann es allerdings auch ausreichen oder vorteilhaft sein, nur eine den Kern umgebende Schicht zu verwenden.

Erfindungsgemäß sind dabei eine oder mehrere oder alle den Kern umgebenden Schichten aus Blei oder einer Blei enthaltenden Legierung hergestellt. Die Beschichtung des Kerns mit Blei oder einer Bleilegierung sorgt dafür, dass der vorzugsweise aus Kupfer bestehende Kern nicht mit dem Elektrolyten der Batterie in Kontakt gerät. Dazu ist es wünschenswert oder erforderlich, eine Bleischicht oder Blei enthaltende Schicht aufzutragen, die den Kern während der gesamten Lebensdauer der Batterie zuverlässig umschließt, Ihre Dicke richtet sich nach den Auslegungskriterien und Beanspruchungsbedingungen der Batterie. Ferner ist es möglich, einzelne Teile der herzustellenden Gitter, beispielsweise die Anschlussfahnen oder Teile davon vollständig aus Blei oder einer Bleilegierung herzustellen.

Daraus ergeben sich entscheidende Vorteile bei der weiteren Verarbeitung der aus dem Gitter hergestellten Elektroden.

Vorzugsweise ist die den Kern umgebende und ausfüllende Schicht oder die erste den Kern umgebende und ausfüllende Schicht eine Blei-Silber-Legierung (Pb-Ag-Legierung). Derartige Legierungen können mit 0,14 bis 3,20 Masse-% Ag Korrosionsraten aufweisen, die um bis zu eine Größenordnung geringer sind als diejenigen von Reinblei.

Nach einer weiteren vorteilhaften Weiterbildung bestehen eine oder mehrere oder alle den Kern umgebenden und ausfüllenden Schichten aus einer galvanischen Beschichtung aus Blei (Pb) oder einer Blei-Zinn-Legierung (Pb-Sn-Legierung) oder einer Blei-Zinn-Antimon-Legierung (Pb-Sn-Sb-Legierung). Es können auch andere Blei enthaltende Legierungen verwendet werden.

Nach einer weiteren vorteilhaften Weiterbildung weist das Gitter eine Fahne auf. Bei vorbekannten Ausführungsformen war es erforderlich, die Fahne gesondert herzustellen und dann mit der Elektrode zu verbinden. Die Erfindung ermöglicht es demgegenüber, eine Elektrode ohne das Erfordernis einer derartigen Verbindung herzustellen. Hierdurch kann der Herstellungsprozess vereinfacht und kostengünstiger ausgestaltet werden.

Vorzugsweise weist die Fahne einen Bereich ohne Kern auf. Dieser Bereich besteht ausschließlich aus einer oder mehreren den Kern umgebenden Schichten. In diesem Bereich können mehrere Elektroden mittels Schweißen oder Einschmelzen verbunden werden.

Die Erfindung betrifft ferner ein Gitterband, das durch mehrere erfindungsgemäße Gitter gekennzeichnet ist. Der Kern wird durch eine galvanische Abscheidung hergestellt. Auch die den Kern umgebende Schicht oder die den Kern umgebenden Schichten werden durch eine galvanische Abscheidung hergestellt. Die Herstellung kann insbesondere durch das in WO 02/057515 A2 beschriebene kontinuierliche Verfahren durchgeführt werden. Durch dieses Verfahren kann ein gegen einen Korrosionsangriff besonders günstiger Gefügeaufbau herbeigeführt werden.

Die Erfindung betrifft ferner eine Elektrode für einen Bleiakkumulator, die durch ein erfindungsgemäßes Gitter gekennzeichnet ist.

Die Erfindung betrifft ferner ein Elektrodenband, das ein erfindungsgemäßes Gitterband enthält. Dieses Elektrodenband kann durch einen Eintrag der aktiven Masse in das Gitterband erhalten werden.

Die Erfindung betrifft ferner eine Elektrode für einen Bleiakkumulator, die aus einem erfindungsgemäßen Elektrodenband durch einen Trenn- und Kaltfließpress-Vorgang hergestellt ist. Wenn die Elektroden dadurch hergestellt werden, dass sie aus einem Elektrodenband abgetrennt werden, ist es erforderlich, dass beim Abtrennen der jeweiligen Elektrode vom Elektrodenband die Trennflächen der Gitter mit Blei oder einer Bleilegierung beschichtet sind, damit auch dort kein direkter Kontakt des Kerns mit dem Elektrolyt der Batterie auftreten kann. Dies kann in vorteilhafter Weise dadurch erfolgen, dass der Trennvorgang zugleich als Fließpressvorgang bzw. Kaltfließpressvorgang durchgeführt wird, beispielsweise durch ein gesteuertes Abquetschen, wodurch die äußere Bleischicht bzw. die äußere Blei enthaltende Schicht die Trennfläche des Gitters umschließt und durch Kaltverschweißung dicht abschließt. Vorteilhaft ist es, die Zahl und Dicke der Trennstellen durch ein entsprechendes Design des Gitterbandes bzw. Elektrodenbandes zu optimieren.

Die Erfindung betrifft auch einen Bleiakkumulator, der durch mehrere erfindungsgemäße Elektroden gekennzeichnet ist.

Blei und Bleilegierungen haben den Nachteil einer hohen Dichte und einer vergleichsweise geringen elektrischen Leitfähigkeit. Diese Nachteile werden durch die Verwendung eines Kerns aus einem eine höhere elektrische Leitfähigkeit als Blei aufweisenden Material behoben. Durch die Erfindung kann die Leistungsdichte eines Bleiakkumulators erheblich erhöht werden. Durch das erfindungsgemäße Gitter und die daraus gefertigte Elektrode kann ferner eine Festigkeitssteigerung erreicht werden. Die Herstellverfahren für vorbekannte Gitter bedingen durch die Verfahrensparameter begrenzte geometrische Formen der Stege und Felder im Gitter, die ihrerseits die Festigkeit, die Stromverteilung, die Korrosionsbeständigkeit und das Batterieverhalten stark einschränken. Durch die Erfindung wird eine möglichst weitgehende Freiheit zur Gestaltung der Gitterform hinsichtlich der Stromoptimierung bereitgestellt.

An dieser Stelle sei darauf hingewiesen, dass der Erfindung die Idee zugrunde liegt, ein Gitter für eine Elektrode eines Bleiakkumulators aus einer mehrschichtigen Verbundstruktur zu realisieren. Dabei ist wesentlich, dass der Kern als Metallgitter ausgeführt ist, welches wiederum galvanisch beschichtet ist.

Des Weiteren ist wesentlich, dass das den Kern bildende Metallgitter entweder aus einem homogenen Material oder aus einer - für sich gesehen - mehrschichtig aufgebauten Verbundstruktur gebildet sein kann und eine höhere Leitfähigkeit als Blei aufweist.

Handelt es sich bei dem Kern um ein homogenes Material, so kann es sich im Konkreten um ein Metallgitter aus Kupfer oder aus einer Kupferlegierung handeln. Die Verbundstruktur des Gitters entsteht dann durch vorzugsweise galvanisches Beschichten dieses Kerns, vorzugsweise mehrfach.

Handelt es sich bei dem Kern bereits um eine mehrschichtige Verbundstruktur, so umfasst diese in vorteilhafter Weise eine Art Seele aus Metall, insbesondere aus Blei oder aus einer Bleilegierung, die dann wiederum galvanisch beschichtet ist. Der so aufgebaute Kern dient als Träger zur weiteren galvanischen Beschichtung, um nämlich die eigentliche Verbundstruktur zu erzeugen.

Ein wesentlicher Aspekt der Erfindung ist darin zu sehen, dass das Gitter eine innere Struktur umfasst, d.h. einen homogenen Kern oder einen Kern mit innerer Seele, der bzw. die für sich gesehen galvanoplastisch, d.h. durch galvanische Formgebung, hergestellt ist. Die Seele zur Bildung des Kerns bzw. der homogene Kern wird galvanoplastisch erzeugt. Dies geschieht in einem geeigneten Bad auf der Oberfläche eines besonderen Werkzeugs. Dort ist die galvanoplastisch zu erzeugende Form im Wesentlichen vorgegeben, so dass sich der Kern bzw. die Seele entsprechend den voranstehenden Ausführungen auf rein galvanoplastische Art herstellen und aus dem Werkzeug entnehmen lässt. Handelt es sich bei dem Kern um einen mehrschichtigen Stoffverbund, so lassen sich weitere Schichten galvanotechnisch aufbringen, und zwar aus unterschiedlichen Metallen bzw. Metalllegierungen.

Des Weiteren ist von Bedeutung, dass nach galvanoplastischer Herstellung einer Seele aus Blei es von Vorteil ist, wenn darauf eine weitere Schicht, so beispielsweise Kupfer, selektiv abgeschieden wird. Eine selektive bzw. partielle Beschichtung durch Abscheiden von Kupfer lässt sich durch Abdecken der nicht mit Kupfer zu beschichtenden Bereiche des Gitters erzeugen. Der so erzeugte Kern mit Schichtstruktur weist durch dieses Vorgehen an unterschiedlichen Stellen einen unterschiedlichen Schichtaufbau auf. Überall dort, wo das spätere Gitter getrennt oder gefügt werden soll, enthält der Kern kein Kupfer.

Auf diesen Kern lassen sich dann wieder eine weitere Schicht oder mehrere Schichen aus Blei oder bleihaltigen Legierungen galvanotechnisch aufbringen. Der Vorteil dieser Technik besteht darin, dass sich so einfach Trenn- und Verbindungsstellen realisieren lassen an denen kein Kupfer befindlich ist.

Noch einmal sei hervorgehoben, dass sich im Lichte der voranstehenden Ausführungen eine schweißtechnische Verbindung gegenüber dem Bleimaterial realisieren lässt, wenngleich das Blei zumindest partiell bzw. selektiv mit Kupfer beschichtet ist. Trennstellen bzw. Verbindungsstellen lassen sich so als Bereiche ohne Kupfer realisieren, worin ein weiterer Vorteil dieser Technik zu sehen ist.

Ausführungsbeispiele der Erfindung werden nachstehend anhand der beigefügten Zeichnung im Einzelnen beschrieben, In der Zeichnung zeigt
- Fig. 1: ein Gitter für eine Elektrodenplatte in einer Draufsicht,
- Fig. 2: einen Schnitt längs der Linie A-A' durch einen Längssteg des Gitters gemäß Fig. 1,
- Fig. 3: einen Schnitt längs der Linie B-B' durch die Fahne des Gitters gemäß Fig. 1,
- Fig. 4: ein Gitterband zur Herstellung eines Elektrodenbandes in einer Draufsicht,
- Fig. 5: ein Elektrodenband und eine daraus durch einen Trennvorgang hergestellte Elektrode in einer Draufsicht und
- Fig. 6: mehrere Elektroden, deren Fahnen durch eine Bleibrücke miteinander verbunden sind, in einer perspektivischen Teilansicht.

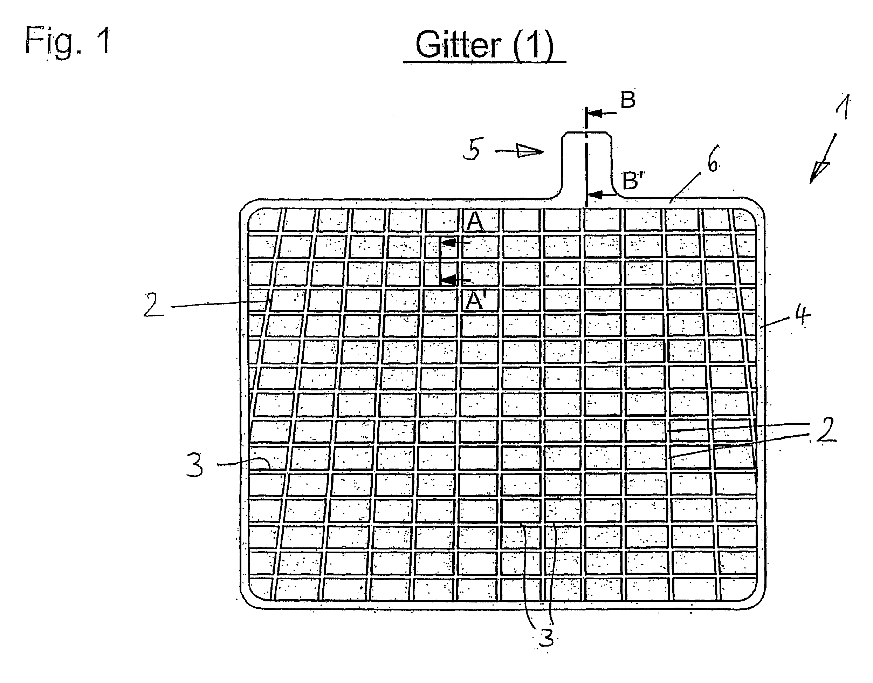

Das in Fig. 1 gezeigte Gitter 1 besteht aus Querstegen 2, Längsstegen 3, einem umlaufenden Rand 4 und einer Fahne 5, die an dessen Oberseite 6 angeformt ist. Die Längsstege 3 verlaufen parallel zur Oberseite 6, die Querstege 2 verlaufen im wesentlichen senkrecht dazu, wobei allerdings die äußeren Querstege 2 zur Fahne 5 hin geneigt verlaufen.

Die Querstege 2 und die Längsstege 3 weisen eine Dicke von 0,7 mm und eine Breite von 1,0 mm auf. Der in den Stegen enthaltene Kern 7 aus Kupfer (Cu-Kern) hat eine Dicke von 0,05 mm und eine Breite von 0,5 mm.

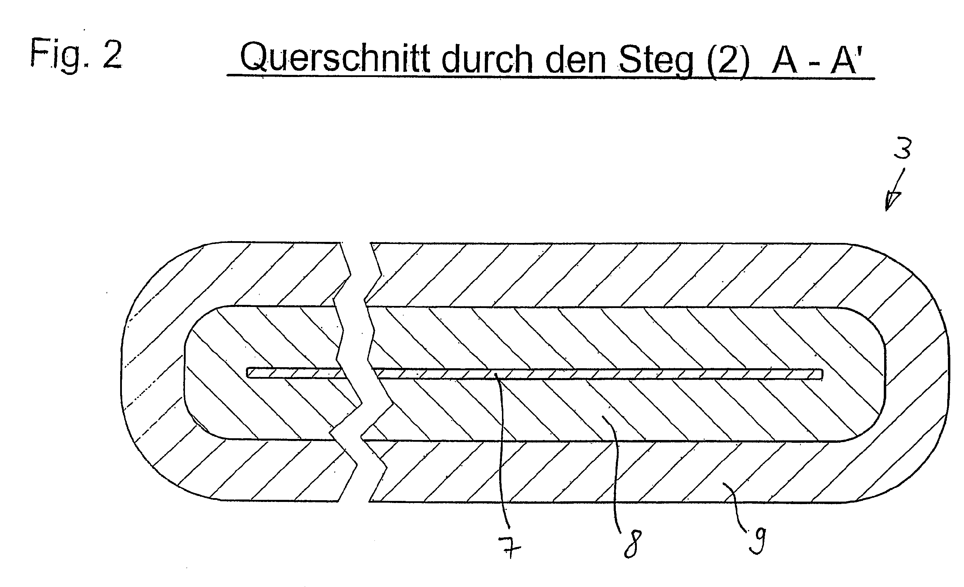

Das Gitter 1 ist durch eine schichtweise galvanische Abscheidung hergestellt. Es bildet den Masseträger für eine Elektrode 17. Seine Stege 2, 3 bestehen in der aus Fig. 2 ersichtlichen Weise aus einem Cu-Kern 7, einer ersten, den Kern 7 umgebenden Schicht 8 aus einer Blei-Silber-Legierung und einer zweiten, die erste Schicht 8 umgebenden Schicht 9 aus Blei. Sowohl der Kern 7 als auch die Bleischichten 8, 9 sind durch eine galvanische Abscheidung hergestellt.

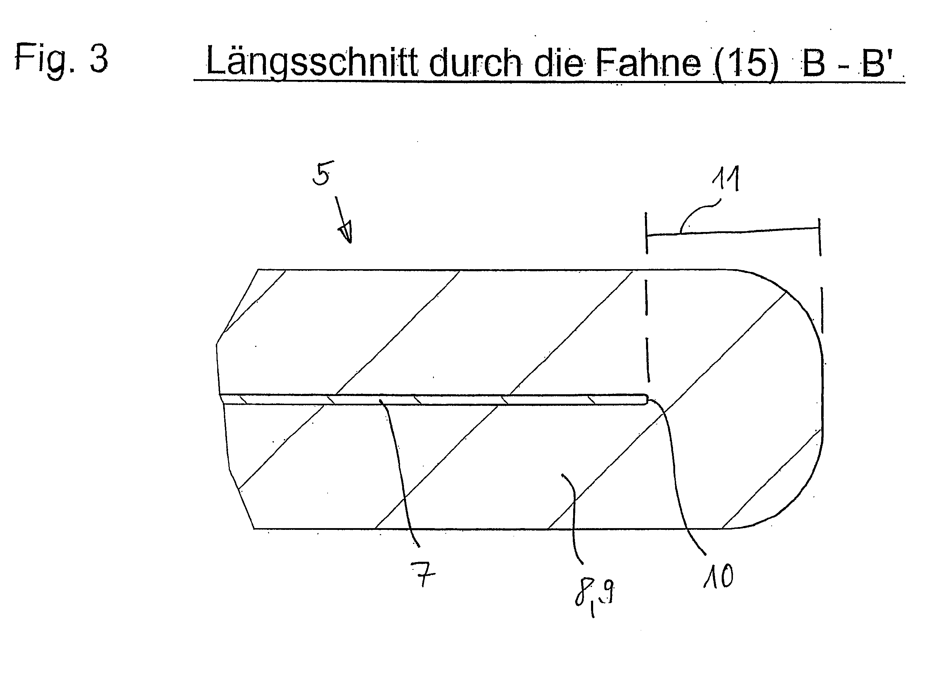

Fig. 3 zeigt einen Schnitt längs der Linie B-B' durch die Fahne 5 des Gitters 1. Der Cu-Kern 7 ist an seiner oberen Kante 10 durch die Bleischichten 8, 9 umgeben. An die obere Kante 10 des Cu-Kerns 7 schließt sich ein Bereich 11 an, der ausschließlich aus den den Kern 7 umgebenden Bleischichten 8, 9 besteht.

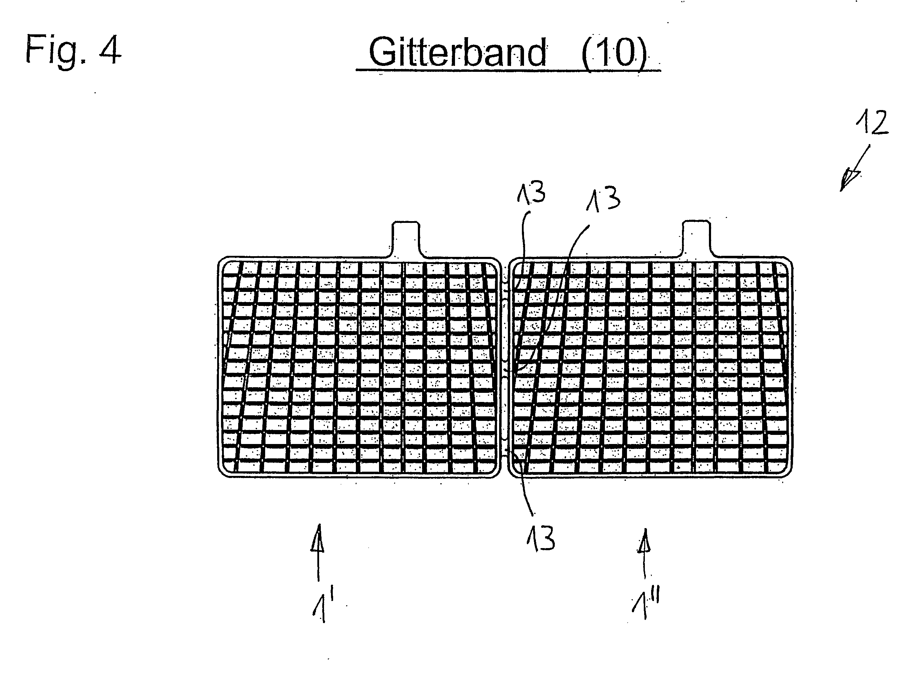

In Fig. 4 sind zwei Gitter 1', 1" eines Gitterbandes 12 gezeigt, das aus einer noch größeren Anzahl derartiger Gitter besteht. Benachbarte Gitter 1' und 1" des Gitterbandes 12 sind durch mehrere beispielsweise drei Trennstellen 13 miteinander verbunden. Das Gitterband 12 besteht aus einem sehr gut leitfähigen Kern 7 und einer oder mehreren darauf galvanisch abgeschiedenen Schichten aus Blei oder einer Bleilegierung, die den Kern 7 des Gitterbandes 12 dicht umgeben.

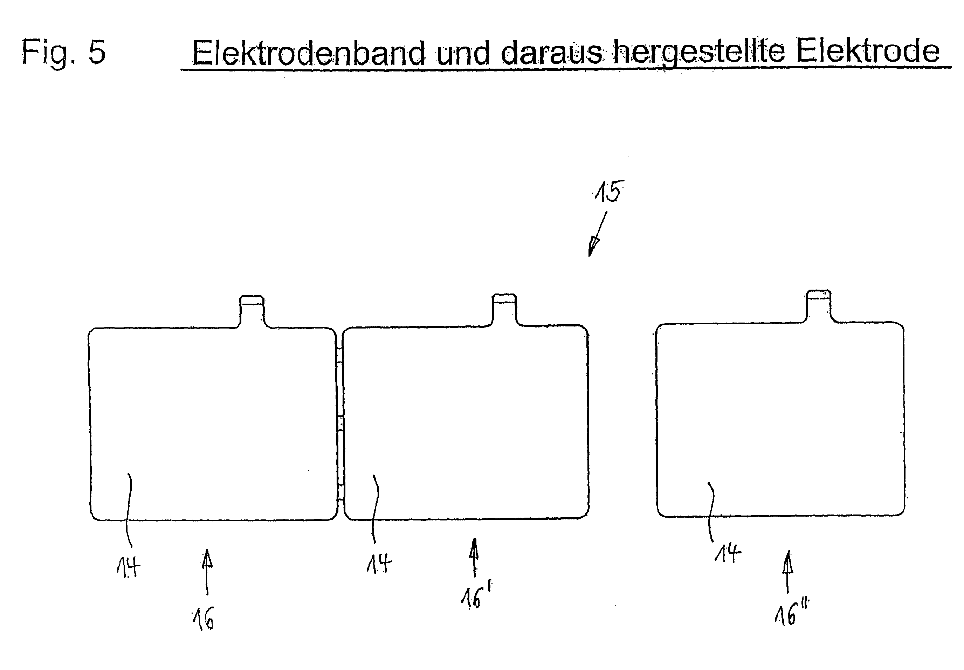

Fig. 5 zeigt ein aus dem Gitterband 12 nach Eintrag der aktiven Masse 14 hergestelltes Elektrodenband 15, das aus einer Vielzahl von Elektroden besteht, von denen nur die Elektroden 16, 16' dargestellt sind. Von dem Elektrodenband 15 ist eine Elektrode 16" durch einen Trenn- und Kaltfließpress-Vorgang abgetrennt worden.

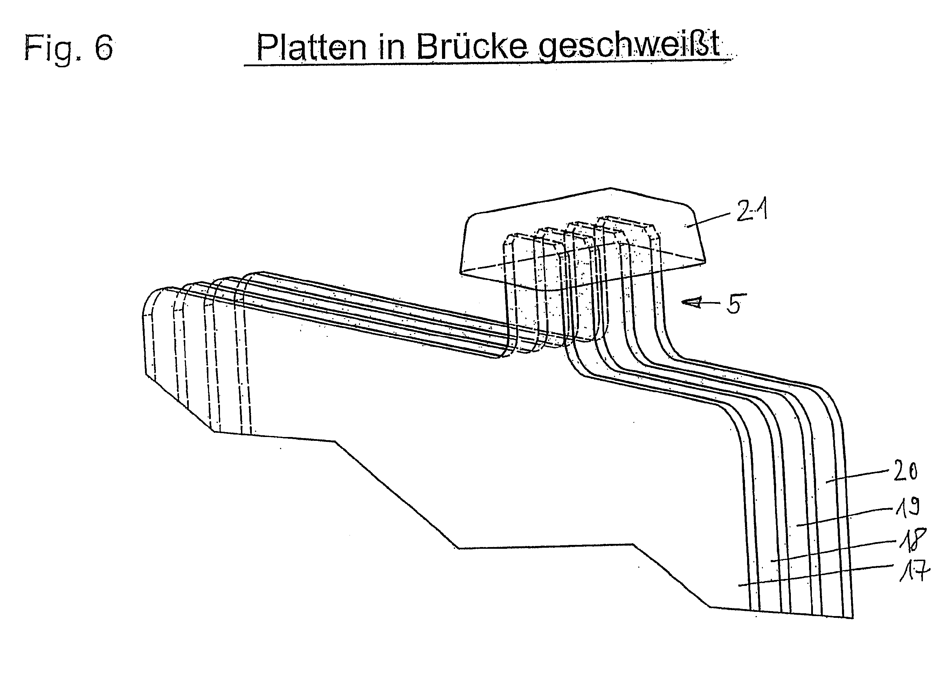

Fig. 6 zeigt vier plattenförmige Elektroden 17, 18, 19, 20, deren Fahnen 5 im Bereich 11 durch eine Bleibrücke 21 miteinander verbunden, nämlich verschweißt, sind.

Die aus dem Gitter gemäß Fig. 1 hergestellten Elektroden 17 - 20 weisen jeweils eine Gesamtdicke von 1,3 mm auf.

Im Vergleich zu einem Gitter aus Reinblei, das einen elektrischen Widerstand im Steg vom 26,1 Ωm aufweist, beträgt der entsprechende Wert in dem vorliegenden Gitter 1 nur 18,4 Ωm, ist also um 29,5% geringer. Gleichzeitig steigt die Streckgrenze von 10,0 auf 17,0 MPa, also um 70%, wenn man als Streckgrenze des galvanisch niedergeschlagenen Kupfers den Mindestwert von 200 MPa einsetzt.

Bei einer abgewandelten Ausführungsform wird ein Gitter mit einem Cu-Kern mit Stegen von 0,15 mm Dicke und 0,5 mm Breite und mit einer Gesamtdicke von 0,7 mm hergestellt. Im Vergleich zu einem Gitter aus Reinblei, das einen elektrischen Widerstand im Steg von 26,1 Ωm aufweist, beträgt der entsprechende Wert im Verbundgitter in diesem Fall nur 10,7 Ωm, ist also um 59,0 % geringer. Gleichzeitig steigt die Streckgrenze von 10 auf 49,5 MPa, also um 395%, wenn man als Streckgrenze des galvanischen niedergeschlagenen Kupfers den Mindestwert von 200 MPa einsetzt.

## Patentansprüche

1. Galvanoplastisch hergestelltes Gitter für eine Elektrode eines Bleiakkumulators, welches eine mehrschichtige Verbundstruktur aufweist, wobei diese aufgebaut ist
- aus einem gitterförmigen Kern (7) aus einem eine höhere elektrische Leitfähigkeit als Blei aufweisenden Material, wobei der Kern (7) Kupfer oder eine Kupfer enthaltende Legierung enthält oder aus Kupfer oder aus einer Kupfer enthaltenden Legierung besteht, und
- aus einer oder mehreren den gitterförmigen Kern (7) umgebenden Schichten (8, 9), die Blei oder eine Blei enthaltende Legierung enthalten, oder die aus Blei oder aus einer Blei enthaltenden Legierung bestehen,
**dadurch gekennzeichnet, dass** der Kern (7) galvanoplastisch hergestellt ist, und dass die den Kern (7) umgebende Schicht (8, 9) oder die den Kern (7) umgebenden Schichten (8, 9) durch eine galvanische Abscheidung hergestellt sind.

2. Gitter nach Anspruch 1, **dadurch gekennzeichnet, dass** mehrere den Kern (7) umgebende Schichten (8, 9) vorhanden sind.

3. Gitter nach einem Anspruch 1 oder 2, **dadurch gekennzeichnet, dass** eine oder mehrere oder alle den Kern (7) umgebenden Schichten (8, 9) aus Blei oder aus einer Blei enthaltenden Legierung hergestellt sind.

4. Gitter nach einem der Ansprüche 1 bis 3, **dadurch gekennzeichnet, dass** die den Kern (7) umgebende Schicht (8, 9) oder die erste den Kern (7) umgebende Schicht (8, 9) eine Pb-Ag-Legierung ist.

5. Gitter nach einem der Ansprüche 1 bis 4, **dadurch gekennzeichnet, dass** eine oder mehrere oder alle den Kern (7) umgebenden Schichten (8, 9) aus Pb oder einer Pb-Sn-Legierung oder einer Pb-Sn-Sb-Legierung bestehen.

6. Gitter nach einem der Ansprüche 1 bis 5, **dadurch gekennzeichnet, dass** das Gitter (1) eine Fahne (5) aufweist, wobei die Fahne (5) einen Bereich (11) ohne Kern (7) aufweisen kann.

7. Gitterband (12), **gekennzeichnet durch** mehrere Gitter (1', 1") nach einem der Ansprüche 1 bis 6.

8. Elektrode für einen Bleiakkumulator, **gekennzeichnet durch** ein Gitter nach einem der Ansprüche 1 bis 6.

9. Elektrodenband (15), **dadurch gekennzeichnet, dass** es ein Gitterband nach Anspruch 7 umfasst.

10. Elektrode für einen Bleiakkumulator, **dadurch gekennzeichnet, dass** die Elektrode (16") aus einem Elektrodenband (15) nach Anspruch 9 durch einen Trenn- und Kaltfließpress-Vorgang hergestellt ist.

11. Bleiakkumulator, **gekennzeichnet durch** mehrere Elektroden (17, 18, 19, 20) nach Anspruch 8 und/oder 10.

## Claims

1. Galvanoplastically produced grid for an electrode of a lead accumulator, which grid has a multi-layer composite structure composed of
- a core (7) in grid form made of a material having a higher electrical conductivity than lead, wherein the core (7) comprises copper or a copper-containing alloy or consists of copper or of a copper-containing alloy, and
- one or more layers (8, 9) surrounding the core (7) in grid form, which layers comprise lead or a lead-containing alloy or consist of lead or of a lead-containing alloy, **characterised in that** the core (7) is produced galvanoplastically and **in that** the layer (8, 9) surrounding the core (7) or the layers (8, 9) surrounding the core (7) is/are produced by galvanic deposition.

2. Grid according to claim 1, **characterised in that** a plurality of layers (8, 9) surrounding the core (7) are present.

3. Grid according to either claim 1 or claim 2, **characterised in that** one or more or all of the layers (8, 9) surrounding the core (7) are made of lead or of a lead-containing alloy.

4. Grid according to any one of claims 1 to 3, **characterised in that** the layer (8, 9) surrounding the core (7) or the first layer (8, 9) surrounding the core (7) is a Pb-Ag alloy.

5. Grid according to any one of claims 1 to 4, **characterised in that** one or more or all of the layers (8, 9) surrounding the core (7) consist of Pb or of a Pb-Sn alloy or of a Pb-Sn-Sb alloy.

6. Grid according to any one of claims 1 to 5, **characterised in that** the grid (1) has a tab (5), wherein the tab (5) can have a region (11) without a core (7).

7. Grid strip (12), **characterised by** a plurality of grids (1', 1") according to any one of claims 1 to 6.

8. Electrode for a lead accumulator, **characterised by** a grid according to any one of claims 1 to 6.

9. Electrode strip (15), **characterised in that** it comprises a grid strip according to claim 7.

10. Electrode for a lead accumulator, **characterised in that** the electrode (16") is produced from an electrode strip (15) according to claim 9 by a separation and cold extrusion process.

11. Lead accumulator, **characterised by** a plurality of electrodes (17, 18, 19, 20) according to claim 8 and/or 10.

## Revendications

1. Grille fabriquée par galvanoplastie pour une électrode d'un accumulateur au plomb, qui comprend une structure composite multicouche, cette dernière étant constituée
- d'un noyau en forme de grille (7), en un matériau ayant une conductivité électrique plus élevée que celle du plomb, le noyau (7) contenant du cuivre ou un alliage contenant du cuivre, ou étant constitué de cuivre ou d'un alliage contenant du cuivre, et
- d'une ou plusieurs couches (8, 9), qui entourent le noyau (7) en forme de grille, qui contiennent du plomb ou un alliage contenant du plomb, ou qui sont constituées de plomb ou d'un alliage contenant du plomb,
**caractérisée en ce que** le noyau (7) est fabriqué par galvanoplastie, et que la couche (8, 9) entourant le noyau (7), ou les couches (8, 9) entourant le noyau (7), sont fabriquées par un dépôt galvanique.

2. Grille selon la revendication 1, **caractérisée en ce que** sont présentes plusieurs couches (8, 9) entourant le noyau (7).

3. Grille selon l'une des revendications 1 ou 2, **caractérisée en ce qu'**une ou plusieurs, ou la totalité des couches (8, 9) entourant le noyau (7), sont fabriquées à partir de plomb ou d'un alliage contenant du plomb.

4. Grille selon l'une des revendications 1 à 3, **caractérisée en ce que** la couche (8, 9) entourant le noyau (7) ou la première couche (8, 9) entourant le noyau (7) est un alliage Pb-Ag.

5. Grille selon l'une des revendications 1 à 4, **caractérisée en ce qu'**une ou plusieurs, ou la totalité des couches (8, 9) entourant le noyau (7) sont constituées de Pb ou d'un alliage Pb-Sn ou d'un alliage Pb-Sn-Sb.

6. Grille selon l'une des revendications 1 à 5, **caractérisée en ce que** la grille (1) comporte une patte (5), la patte pouvant comporter une zone (11) sans noyau (7).

7. Bande-grille (12), **caractérisée par** plusieurs grilles (1', 1") selon l'une des revendications 1 à 6.

8. Electrode pour un accumulateur au plomb, **caractérisée par** une grille selon l'une des revendications 1 à 6.

9. Bande-électrode (15), **caractérisée en ce qu'**elle comprend une bande-grille selon la revendication 7.

10. Electrode pour un accumulateur au plomb, **caractérisée en ce que** l'électrode (16") est fabriquée à partir d'une bande-électrode (15) selon la revendication 9 par un procédé de séparation et d'extrusion à froid.

11. Accumulateur au plomb, **caractérisé par** plusieurs électrodes (17, 18, 19, 20) selon les revendications 8 et/ou 10.
